# FASCICULE DE BREVET EUROPEEN

(11) **EP 2 865 189 B1**
(45) Date de publication et mention de la délivrance du brevet: **15.08.2018**
(21) Numéro de dépôt: 13730600.7
(22) Date de dépôt: 24.06.2013
(51) Int. Cl.: H04N 21/236, H04N 21/8547, H04H 20/10, H04N 21/234, H04H 20/67

(54) **PROCÉDÉ ET DISPOSITIF D'HORODATAGE D'UN FLUX DE DONNÉES, PROCÉDÉ ET DISPOSITIF D'INSERTION, PRODUITS PROGRAMME D'ORDINATEUR ET MÉDIUM DE STOCKAGE CORRESPONDANTS**
VERFAHREN UND VORRICHTUNG ZUR ZEITSTEMPELUNG EINES DATENSTROMS, EINFÜGUNGSVERFAHREN UND -VORRICHTUNG SOWIE ENTSPRECHENDE COMPUTERPROGRAMMPRODUKTE UND SPEICHERMEDIUM
METHOD AND DEVICE FOR TIMESTAMPING A DATA STREAM, INSERTION METHOD AND DEVICE, AND CORRESPONDING COMPUTER PROGRAM PRODUCTS AND STORAGE MEDIUM

(30) Priorité: 26.06.2012 FR 1256067
(43) Date de publication de la demande: 29.04.2015
(73) Titulaire: TDF, 92120 Montrouge Cedex (FR)
(72) Inventeur: DUPAIN, Pascal, F-35131 Pont Pean (FR)
(74) Mandataire: Vidon Brevets & Stratégie
(86) Numéro de dépôt international: PCT/EP2013/063166
(87) Numéro de publication internationale: WO 2014/001270

(56) Documents cités:
- EP-A2- 1 139 668
- FR-A1- 2 937 490
- US-A1- 2006 200 852
- DEKTEC DIGITAL VIDEO B V: "DTAPI-DVB-C2/T2 Multi-PLP Extensions", INTERNET CITATION, mai 2012 (2012-05), pages 1-66, XP002693599, Extrait de l'Internet: URL:http://www.dektec.com/Products/SDK/DTA PI/Downloads/DTAPI%20Reference%20-%20DVB-C 2+T2%20Multi-PLP%20Extensions.pdf [extrait le 2013-03-12]

## Description

### 1. DOMAINE DE L'INVENTION

Le domaine de l'invention est celui de la transmission et de la diffusion d'informations numériques.

Plus précisément, l'invention concerne une technique d'horodatage d'un flux de données numériques permettant l'insertion synchrone/déterministe d'au moins une partie (c'est-à-dire une composante) d'un flux de données secondaire dans un flux de données principal.

On rappelle qu'une composante correspond par exemple à un élément d'un signal composite, tel que la partie audio ou la partie vidéo d'un signal multimédia, et qu'un ensemble de composantes forme par exemple un service. Par exemple, ces composantes peuvent correspondre à des données locales ou régionales à insérer dans un flux de données national.

L'invention s'applique notamment, mais non exclusivement, à un flux de données numériques conforme à la norme de radiodiffusion DVB-T2 (« *Digital Video Broadcasting* - *Terrestrial* » en anglais, pour « *diffusion vidéo numérique terrestre*»)*.*

Dans un mode de réalisation préférentiel, mais non exclusif, ces techniques d'horodatage et d'insertion s'inscrivent dans le contexte de la norme ISO/IEC 13818-1 relative aux multiplex MPEG-TS (« *Motion Picture Expert Group* - *Transport Stream* » en anglais) et aux réseaux SFN (« *Single Frequency Network* » en anglais, pour « *réseau à fréquence unique* ») ou MFN (« *Multiple Frequency Network* » en anglais, pour *« réseau multifréquences* »)*.*

### 2. ARRIÈRE-PLAN TECHNOLOGIQUE

On s'attache plus particulièrement dans la suite de ce document à décrire la problématique existant dans le domaine de l'insertion synchrone/déterministe de données d'un flux secondaire dans un flux principal, dans un réseau SFN d'architecture DVB-T2, à laquelle ont été confrontés les inventeurs de la présente demande de brevet.

L'invention ne se limite bien sûr pas à ce domaine particulier d'application, mais présente un intérêt pour toute technique d'horodatage de flux et/ou d'insertion synchrone/déterministe de données d'un flux secondaire dans un flux principal, devant faire face à une problématique proche ou similaire.

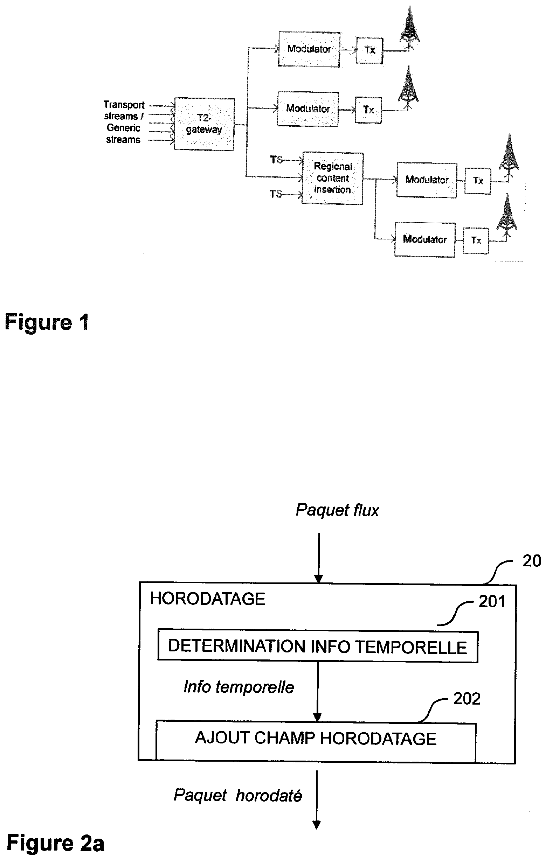

La norme DVB-T2 permet l'insertion de contenus locaux/régionaux, comme par exemple décrit dans le document « *Modulator Interface (T2-MI) for a second generation digital terrestrial television broadcasting system (DVB-T2)* », et illustré en figure 1.

Toutes les transmissions d'un tel système DVB-T2 proviennent d'une unique « passerelle » (« *gateway »* en anglais) générant un flux d'origine, ou flux principal, de type « T2-MI » (pour « *T2_Modulator Interface* » en anglais). Ce flux d'origine est distribué à travers un réseau de distribution, et un « inserteur local de contenu » (pour « *Local Content Inserter LoCI* » en anglais) permet d'insérer, dans ce flux d'origine reçu, un contenu local « TS », générant un flux résultant de type « T2-MI ».

La synchronisation de cette insertion est gérée de plusieurs manières possibles, toutes basées sur la contrainte d'un débit identique ou inférieur du flux à insérer par rapport au débit du flux d'origine. Un inconvénient de cette technique de l'art antérieur réside donc dans la nécessité d'allouer un débit pour les trames à remplacer du flux d'origine. De plus, cette technique nécessite l'utilisation d'une deuxième passerelle (« *Regional content Insertion* ») et le transport d'un flux T2-MI complet localement.

On connaît également une autre technique d'insertion d'une partie d'un flux secondaire dans un flux principal, basée sur une insertion au niveau PLP (pour « *Physical Layer Pipe* » en anglais), et non MPEG-TS comme ci-dessus. Un inconvénient de cette technique réside dans l'impossibilité d'insérer une composante à l'image près, ainsi que dans l'impossibilité d'insérer un service *i* parmi *n* services d'un flux MPEG-TS dans une PLP.

On connaît également une technique d'insertion d'une partie d'un flux secondaire dans un flux principal, décrite notamment dans le document de brevet FR2937490, basée sur un horodatage des paquets des flux, dans un contexte conforme à la norme de radiodiffusion DVB-T, et donc non utilisable pour un système DVB-T2.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique d'insertion synchrone et déterministe d'une partie d'un flux secondaire dans un flux principal, pouvant ainsi être utilisée en environnement SFN (en assurant que les insertions effectuées dans divers équipements sont réalisées au même moment).

Un autre objectif d'au moins un mode de réalisation de l'invention est de fournir une telle technique d'insertion ne nécessitant pas de modification du flux principal et donc ne nécessitant pas d'équipement spécifique supplémentaire.

Au moins un mode de réalisation de l'invention a également pour objectif de fournir une telle technique d'insertion synchrone ne nécessitant pas de référence de synchronisation externe (de type GPS par exemple).

Au moins un mode de réalisation de l'invention a également pour objectif de fournir une telle technique d'insertion permettant une implémentation simple et peu coûteuse.

### 4. EXPOSÉ DE L'INVENTION

Dans un mode de réalisation particulier de l'invention, il est proposé un procédé d'horodatage d'un flux de données organisé en paquets successifs, comprenant, pour au moins un paquet du flux de données, une étape d'horodatage comprenant les sous-étapes suivantes et délivrant au moins un paquet horodaté :
▪ détermination d'au moins une information temporelle ;
▪ ajout, dans le paquet, d'au moins un champ d'horodatage comprenant au moins l'information temporelle.

Ainsi, ce mode de réalisation particulier de l'invention repose sur une approche tout à fait nouvelle et inventive de l'horodatage d'un flux de données, permettant un horodatage précis de certains des paquets de ce flux, et permettant par exemple d'insérer localement, dans une plaque SFN, en amont de chaque émetteur, une ou plusieurs composantes (provenant d'un flux dit secondaire, TS local ou d'un fichier TS) dans le flux MPEG-TS, dit principal, de manière synchrone (au même instant) et déterministe. Ainsi, chaque signal en sortie du modulateur est identique et peut conserver la caractéristique SFN du réseau.

Pour ce faire, un champ d'horodatage est ajouté à certains paquets des deux flux (principal et secondaire), à partir d'une information temporelle obtenue préalablement.

Selon un aspect particulier de l'invention, le champ d'horodatage comprend deux parties, une première partie représentant les secondes et une deuxième partie représentant les nanosecondes, et l'étape de détermination comprend les sous-étapes suivantes :
- si le paquet est un paquet de type « T2-MI DVB-T2 Timestamp » ou « MPEG-TS T2-MIP » :
   o obtention d'une première information temporelle, dite information temporelle entière, à partir du champ « second_since_2000 » et représentant les secondes, et d'une deuxième information temporelle, dite information temporelle décimale, à partir du champ « subseconds » et représentant les nanosecondes,
   o initialisation des première et deuxième parties du champ d'horodatage respectivement avec les informations temporelles entière et décimale obtenues,
- sinon :
   o détermination de la durée du paquet, à partir d'une taille déterminée du paquet et d'un débit déterminé du flux donné ;
   o mise à jour des parties du champ d'horodatage en fonction de la durée du paquet déterminée et des informations temporelles entière et décimale préalablement obtenues.

Ainsi, selon ce mode de réalisation particulier de l'invention, des informations temporelles extraites de certains paquets particuliers du flux permettent d'initialiser le champ d'horodatage ajouté ensuite à ces paquets pour permettre l'insertion synchrone. Ensuite, la mise à jour des champs d'horodatage pour les paquets distincts de ces paquets particuliers est effectuée à l'aide de ces informations temporelles et de la durée des paquets du flux.

Il n'est donc pas nécessaire d'ajouter au flux une signalisation particulière pour pouvoir ensuite l'horodater, donc aucune préparation du flux n'est nécessaire au niveau national, et aucun équipement spécifique n'est donc requis.

Par ailleurs, il n'est pas non plus nécessaire d'utiliser une référence externe de synchronisation (par exemple de type GPS).

Selon une caractéristique particulière, les informations temporelles entière et décimale sont obtenues à partir du champ « t2_timestamp_mip » si le paquet est un paquet de type « MPEG-TS T2-MIP ».

Selon un mode de réalisation particulier de l'invention, l'information temporelle entière correspond au résultat d'une différence entre la valeur courante dudit champ « second_since_2000 » et la valeur dudit champ « second_since_2000 » à 0h00 du jour courant et l'information temporelle décimale correspond à la valeur du champ « subseconds » converti en nanosecondes.

Selon une caractéristique particulière de l'invention, la durée du paquet est exprimée en nanosecondes et l'étape de mise à jour du champ d'horodatage comprend les sous-étapes suivantes :
- initialisation d'un premier compteur et d'un deuxième compteur avec respectivement avec les informations temporelles entière et décimale préalablement obtenues ;
- incrémentation du deuxième compteur avec la durée du paquet, délivrant une valeur incrémentée du deuxième compteur ;
- si la valeur incrémentée du deuxième compteur est supérieure ou égale à une valeur maximale prédéterminée :
   o réinitialisation du deuxième compteur avec une nouvelle valeur courante égale à la valeur incrémentée moins la valeur maximale prédéterminée ;
   o incrémentation d'une unité de la valeur du premier compteur ;
- mise à jour des première et deuxième parties du champ d'horodatage respectivement avec les valeurs des premier et deuxième compteurs.

Selon un aspect particulier de l'invention, le flux de données est conforme à la norme de radiodiffusion DVB-T2.

L'invention concerne également, selon un autre mode de réalisation, un dispositif d'horodatage d'un flux de données organisé en paquets successifs, comprenant, pour au moins un paquet du flux de données, des moyens d'horodatage comprenant les moyens suivants et délivrant au moins un paquet horodaté :
▪ des moyens de détermination d'au moins une information temporelle ;
▪ des moyens d'ajout, dans le paquet, d'au moins un champ d'horodatage comprenant au moins l'information temporelle.

Avantageusement, le dispositif d'horodatage comprend des moyens de mise en oeuvre des étapes qu'il effectue dans le procédé d'horodatage tel que décrit précédemment, dans l'un quelconque de ses différents modes de réalisation.

Dans un autre mode de réalisation de l'invention, il est proposé un produit programme d'ordinateur qui comprend des instructions de code de programme pour la mise en oeuvre du procédé d'horodatage (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé d'horodatage (dans l'un quelconque de ses différents modes de réalisation).

Dans un autre mode de réalisation de l'invention, il est proposé un procédé d'insertion d'au moins une partie d'un flux de données secondaire dans un flux de données principal, permettant d'obtenir un flux de données résultant, chaque flux étant organisé en paquets successifs.

Selon un mode de réalisation de l'invention, le procédé d'insertion comprend les étapes suivantes, pour au moins un paquet du flux principal, dit premier paquet, et au moins un paquet du flux secondaire, dit deuxième paquet :
- une étape d'horodatage conforme au procédé d'horodatage selon l'un quelconque de ses différents modes de réalisation décrits précédemment ;
- une étape d'insertion d'au moins une partie du flux secondaire dans le flux principal, en fonction des premier et deuxième paquets horodatés délivrés par l'étape d'horodatage.

Ainsi, ce mode de réalisation particulier de l'invention repose sur une approche tout à fait nouvelle et inventive de l'insertion d'au moins une partie d'un flux secondaire dans un flux principal, basée sur un horodatage précis de certains des paquets de ces deux flux, et permettant une insertion synchrone et déterministe.

Cette insertion peut être continue (toutes les composantes d'un service sont par exemple remplacées par un autre service) ou ponctuelle (« décrochage » ponctuel d'un service).

Selon une caractéristique particulière de l'invention, le procédé d'insertion comprend, préalablement à l'étape d'horodatage, les étapes suivantes :
- détection, dans le flux principal, d'au moins un paquet à remplacer ;
- détection, dans le flux secondaire, d'au moins un paquet à insérer, et l'étape d'horodatage est mise en oeuvre pour au moins le paquet à remplacer et le paquet à insérer, et délivre au moins un paquet à remplacer horodaté et un paquet à insérer horodaté, et l'étape d'insertion remplace le paquet à remplacer horodaté par le paquet à insérer horodaté si H1 ≤ H2 < H1 + D1, avec H1 l'heure indiquée par le champ d'horodatage du paquet à remplacer horodaté, H2 l'heure indiquée par le champ d'horodatage du paquet à insérer horodaté, et D1 la durée du paquet à remplacer.

Ainsi, selon ce mode de réalisation particulier de l'invention, les paquets horodatés sont les paquets du flux principal à remplacer et les paquets du flux secondaire à insérer Ces paquets sont détectés puis horodatés, selon un mode de réalisation de l'invention, et enfin les paquets à remplacer horodatés du flux principal sont remplacés par les paquets à insérer horodatés du flux secondaire, pour délivrer un flux résultant. Cette insertion est mise en oeuvre en fonction des champs d'horodatage ajoutés, de façon à remplacer un paquet d'une certaine heure par un paquet de la même heure (ou d'une heure décalée d'une durée prédéterminée).

Selon une caractéristique particulière de l'invention, le procédé d'insertion comprend, préalablement à l'étape d'horodatage, une étape de remplacement du paquet à remplacer détecté par un paquet de bourrage et l'étape d'horodatage est mise en oeuvre pour au moins le paquet de bourrage.

Selon un aspect particulier de l'invention, le flux résultant est un flux devant être diffusé par au moins un émetteur d'un réseau de diffusion de type SFN, dans lequel chacun des émetteurs utilise une même fréquence d'émission des données du flux résultant.

Dans un autre mode de réalisation, l'invention concerne un dispositif d'insertion d'au moins une partie d'un flux de données secondaire dans un flux de données principal, permettant d'obtenir un flux de données résultant, chaque flux étant organisé en paquets successifs, comprenant les moyens suivants, pour au moins un paquet du flux principal, dit premier paquet, et au moins un paquet du flux secondaire, dit deuxième paquet :
- des moyens d'horodatage comprenant un dispositif d'horodatage selon l'un quelconque des modes de réalisation décrits précédemment ;
- des moyens d'insertion d'au moins une partie du flux secondaire dans le flux principal, en fonction des premier et deuxième paquets horodatés délivrés par les moyens d'horodatage.

Avantageusement, le dispositif d'insertion comprend des moyens de mise en oeuvre des étapes qu'il effectue dans le procédé d'insertion tel que décrit précédemment, dans l'un quelconque de ses différents modes de réalisation.

Dans un autre mode de réalisation de l'invention, il est proposé un produit programme d'ordinateur qui comprend des instructions de code de programme pour la mise en oeuvre du procédé d'insertion (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé d'insertion (dans l'un quelconque de ses différents modes de réalisation).

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, présente un synoptique d'un système d'insertion locale de contenu selon la norme DVB-T2 de l'art antérieur ;
- les figures 2a à 2c présentent les principales étapes d'un mode de réalisation particulier du procédé d'horodatage et du procédé d'insertion selon l'invention ;
- les figures 3a à 3c présentent des exemples de flux de données impliqués dans une insertion selon un mode de réalisation particulier de l'invention ;
- les figures 4a et 4b présentent des exemples d'initialisation d'un champ d'horodatage selon deux modes de réalisation particuliers de l'invention ;
- la figure 5 présente la structure d'un dispositif d'horodatage selon un mode de réalisation particulier de l'invention ;
- les figures 6a à 6f présentent des exemples d'applications des procédés d'horodatage et d'insertion selon des modes de réalisation particuliers de l'invention.

Sur toutes les figures du présent document, les éléments et étapes identiques sont désignés par une même référence numérique.

### 6. DESCRIPTION DÉTAILLÉE

### 6.1 Principe général

Le principe général de l'invention repose sur un horodatage précis de certains paquets d'un flux de données principal et d'un flux de données secondaires permettant une insertion synchrone et déterministe d'une partie du flux secondaire dans le flux principal.

Ainsi, l'horodatage de certains paquets (les paquets à remplacer dans le flux principal et les paquets à insérer dans le flux secondaire), permet de délivrer un ou plusieurs flux résultants, après insertion, synchrone(s) avec le flux principal.

Cette insertion peut être mise en oeuvre, selon différents modes de réalisation de l'invention, à plusieurs endroits d'un réseau SFN d'architecture DVB-T2, par exemple au niveau d'un récepteur pour un «décrochage» de service (information locale, publicité, ...), ou en amont de chaque émetteur du réseau SFN.

L'insertion selon les différents modes de réalisation particuliers de l'invention peut notamment être mise en oeuvre dans un dispositif permettant l'horodatage, l'insertion déterministe et synchrone, puis le multiplexage, appelé par la suite «remultiplexeur DVB-T2 déterministe».

### 6.2 Description de modes de réalisation de l'invention

### 6.2.1 Horodatage et insertion

On présente maintenant, en relation avec les figures 2a à 2c, les principales étapes du procédé d'horodatage et du procédé d'insertion selon un mode de réalisation particulier de l'invention.

Une première étape 20 d'horodatage est mise en oeuvre, pour au moins un paquet du flux, délivrant au moins un paquet horodaté.

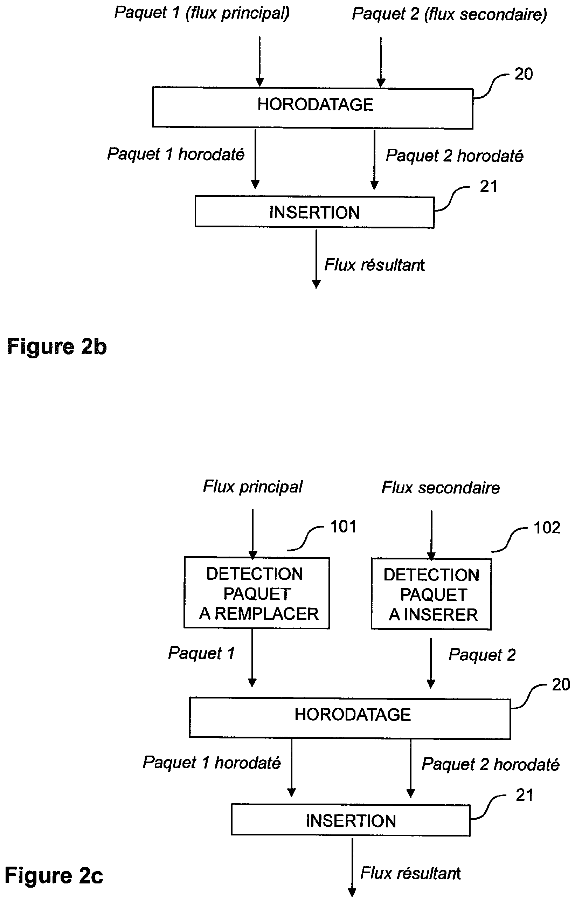

Cette première étape d'horodatage comprend une première sous-étape 201 de détermination d'une information temporelle, permettant ensuite d'ajouter au paquet un champ d'horodatage comprenant au moins cette information temporelle, lors d'une sous-étape 202. Les paquets auxquels un champ d'horodatage a été ajouté sont notés «*paquets horodatés*», et permettent ensuite la mise en oeuvre d'une étape 21 d'insertion d'une partie d'un flux secondaire dans un flux principal, comme illustré en figure 2b.

Cette étape 21 d'insertion délivre un flux résultant, dans lequel une partie des paquets du flux principal d'origine a été remplacée par une partie des paquets du flux secondaire. Ainsi, comme illustré en figure 2b, l'étape 20 d'horodatage est mise en oeuvre sur au moins un paquet d'un flux principal (*Paquet 1*) et au moins un paquet d'un flux secondaire (*Paquet 2*) et délivre au moins deux paquets horodatés (*Paquet 1 horodaté* et *Paquet 2 horodaté*)*.*

Par exemple, selon un mode de réalisation particulier de l'invention illustré en figure 2c, les paquets à horodater des flux principal et secondaire sont identifiés respectivement lors des étapes 101 et 102 de détection, permettant de détecter au moins un paquet à remplacer dans le flux principal et au moins un paquet à insérer dans le flux secondaire.

Par ailleurs, une fois identifiés/détectés les paquets à remplacer dans le flux principal, ils peuvent d'abord être remplacés par des paquets de bourrage (afin de libérer de la bande passante), avant d'être horodatés selon l'invention, de façon à appliquer l'insertion et le remultiplexage déterministe uniquement sur ces paquets de bourrage.

Selon ce mode de réalisation particulier de l'invention, l'insertion synchrone et déterministe consiste à remplacer le premier paquet à remplacer horodaté du flux d'origine par un paquet horodaté du flux secondaire ayant un champ d'horodatage de valeur similaire ou proche. Ainsi, on considère que, si H1 est l'heure indiquée par le champ d'horodatage du premier paquet à remplacer horodaté (*Paquet 1 horodaté*)*,* H2 l'heure indiquée par le champ d'horodatage d'un paquet à insérer horodaté (par exemple *Paquet 2 horodaté*)*,* et D1 la durée du paquet à remplacer (*Paquet 1 horodaté*)*,* alors ce dernier ci est remplacé par *Paquet 2 horodaté* H1 ≤ H2 < H1 + D1, c'est-à-dire si leurs horodatages respectifs ne sont pas différentes de plus d'une durée paquet.

Les paquets suivants du flux principal, préalablement horodatés, sont donc remplacés par les paquets du flux secondaire, selon le même principe.

On rappelle que dans le contexte d'un réseau SFN d'architecture DVB-T2, tous les «remultiplexeurs DVB-T2 déterministes» reçoivent le même flux principal et peuvent donc horodater les paquets de la même manière et effectuer l'insertion de la même manière synchrone et déterministe.

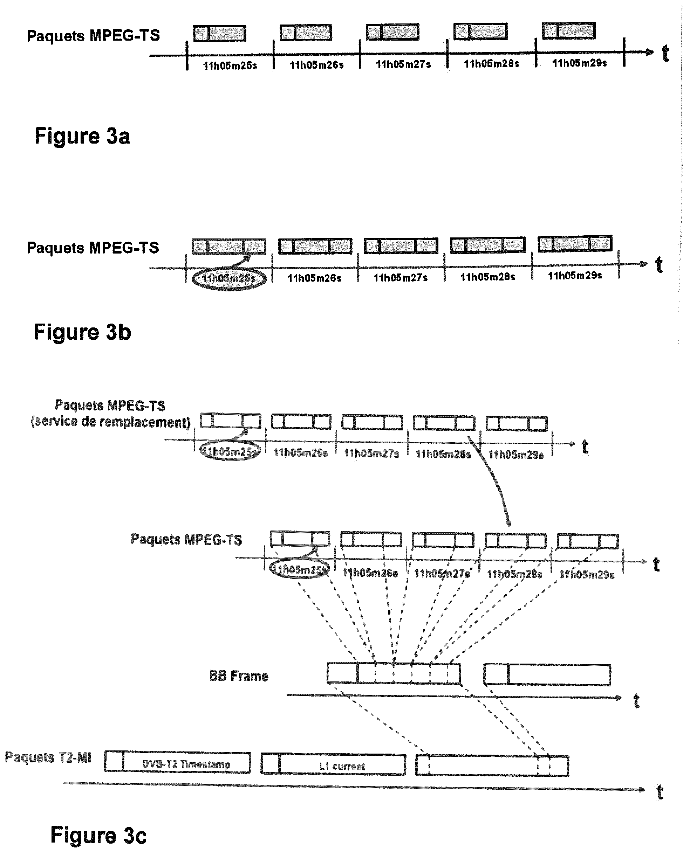

On présente maintenant, en relation avec les figures 3a à 3c, des exemples de flux de données impliqués dans les procédés d'horodatage et d'insertion selon ce mode de réalisation de l'invention.

La figure 3a présente un exemple de paquets MPEG-TS successifs, par exemple dans une trame notée «BB-Frame» («BaseBand Frame» en anglais), pour lesquels un paquet est reçu chaque seconde, avec un débit de 1,504 Mbps.

La figure 3b présente un exemple de paquets MPEG-TS successifs, tels qu'illustrés en figure 3a, après mise en oeuvre de l'étape d'horodatage selon ce mode de réalisation de l'invention, et présentant donc un champ supplémentaire d'horodatage, comprenant par exemple l'heure du paquet.

Enfin, la figure 3c illustre un exemple d'insertion d'un paquet d'un flux secondaire (par exemple le paquet de 11h05m28s dans un service de remplacement) à la place d'un paquet de même horodatage (paquet de 11h05m28s) dans un flux principal.

Selon ce mode de réalisation de l'invention, l'horodatage des paquets est effectué au niveau MPEG-TS, dans les «BB-Frame».

### 6.2.2 Initialisation du champ d'horodatage

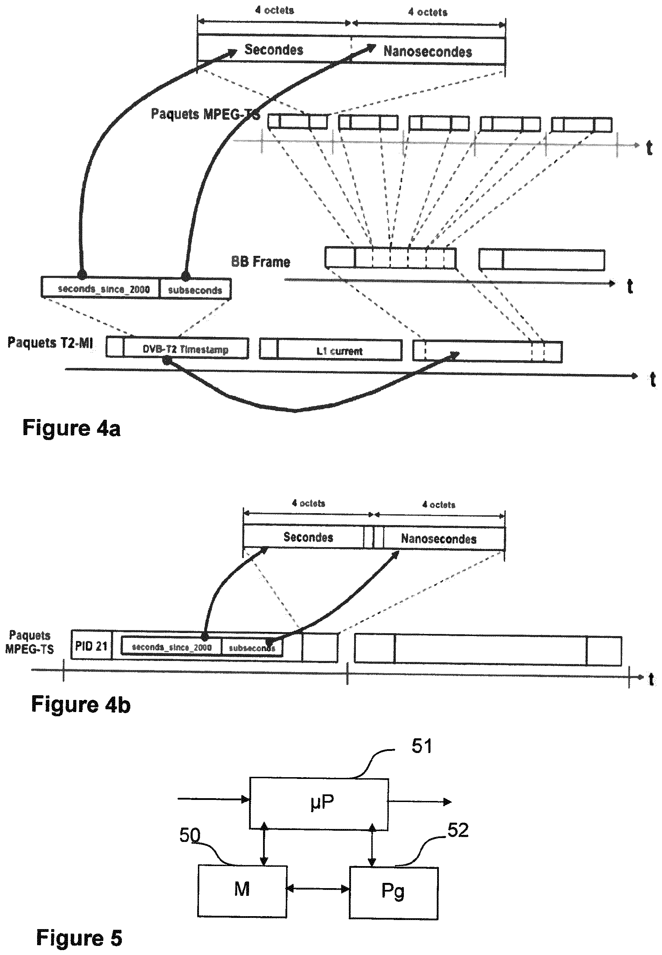

On présente maintenant, en relation avec les figures 4a et 4b, des exemples d'initialisation d'un champ d'horodatage selon deux modes de réalisation particuliers de l'invention.

Selon ces deux modes de réalisation particuliers de l'invention, le champ d'horodatage ajouté comprend deux parties, une première partie représentant les secondes et une deuxième partie représentant les nanosecondes. Par exemple, chacune de ces parties peut contenir une valeur sur quatre octets, le champ d'horodatage ayant donc une longueur de huit octets.

Selon un premier mode de réalisation, illustré en figure 4a, les deux parties du champ d'horodatage sont initialisées à partir de la couche «T2-MI», les paquets «T2-MI» comprenant les paquets MPEG-TS à multiplexer.

Dans un premier temps, on détecte le paquet de type «T2-MI DVB-T2 Timestamp» (les paquets «T2-MI DVB-T2 Timestamp» sont détectés en filtrant les paquets avec le «packet-type» égal à 20₁₆), pour obtenir au moins une information temporelle permettant ensuite l'horodatage des paquets MPEG-TS suivants. Ainsi, on extrait du paquet «T2-MI DVB-T2 Timestamp» détecté les champs «second_since_2000 » et «subseconds», de façon à obtenir respectivement une première information temporelle représentant les secondes et une deuxième information temporelle représentant les nanosecondes.

La valeur du champ « second_since_2000 » indique le nombre de secondes écoulées depuis le 1^{er} janvier 2000, 0h00m00, et doit être traitée de façon à délivrer une valeur représentative des secondes écoulées depuis le début (0h00m00) de la journée courante, sur quatre octets. Un calcul de différence est donc effectué pour prendre comme référence la journée courante.

Par ailleurs, la valeur du champ «subseconds» doit être convertie en nanosecondes, pour délivrer une valeur sur quatre octets, représentative des nanosecondes associées à la première information temporelle en secondes.

Ainsi, un champ d'horodatage peut être initialisé avec les deux informations temporelles obtenues.

Dans un deuxième temps, on détecte le premier paquet «T2-MI» comprenant le premier paquet MPEG-TS à horodater (le premier paquet que l'on souhaite remplacer), auquel on ajoute un champ d'horodatage initialisé tel que décrit précédemment.

Selon un deuxième mode de réalisation, illustré en figure 4b, les deux parties du champ d'horodatage sont initialisées à partir d'un paquet de type «MPEG-TS T2-MIP».

Dans un premier temps, on détecte le paquet de type « MPEG-TS T2-MIP » (les paquets MIP sont détectés en filtrant les paquets avec l'identifiant de paquet PID égal à 0x15 en hexadécimal), pour obtenir au moins une information temporelle permettant ensuite l'horodatage des paquets MPEG-TS suivants. Ainsi, on extrait du paquet «MPEG-TS T2-MIP» détecté le champ «t2_timestamp_mip», comprenant les champs «second_since_2000 » et «subseconds», de façon à obtenir respectivement une première information temporelle représentant les secondes et une deuxième information temporelle représentant les nanosecondes.

Comme pour le mode de réalisation précédent, la valeur du champ «second_since_2000» indique le nombre de secondes écoulées depuis le 1^{er} janvier 2000, 0h00m00, et doit être traitée de façon à délivrer une valeur représentative des secondes écoulées depuis le début (0h00m00) de la journée courante, sur quatre octets. Un calcul de différence est donc effectué pour prendre comme référence la journée courante. Par ailleurs, la valeur du champ «subseconds» doit être convertie en nanosecondes, pour délivrer une valeur sur quatre octets, représentative des nanosecondes associées à la première information temporelle en secondes.

Ainsi, un champ d'horodatage peut être initialisé avec les deux informations temporelles obtenues.

Dans un deuxième temps (et à la différence du mode de réalisation précédent, dans lequel le paquet «T2-MI DVB-T2 Timestamp» n'était pas horodaté), ce paquet MIP de PID=0x15 détecté est horodaté, en lui ajoutant un champ d'horodatage initialisé tel que décrit précédemment.

### 6.2.3 Incrémentation du champ d'horodatage

Dans les deux modes de réalisation décrits ci-dessus, en relation avec les figures 4a et 4b, les paquets suivant le premier paquet horodaté avec le champ d'horodatage initialisé sont ensuite également horodatés, en incrémentant la valeur du champ d'horodatage de la durée d'un paquet MPEG-TS.

Ainsi, si on prend un exemple de flux de débit 24,882 Mbps et des paquets de 188 octets, la durée d'un paquet est de 60444 nanosecondes, valeur qui sera ajoutée au champ d'horodatage à chaque paquet suivant.

Par exemple, si l'on considère que l'horodatage initial (du premier paquet horodaté) est H0, alors le champ d'horodatage du deuxième paquet horodaté aura la valeur H1 = (H0 + 1 durée paquet) = (H0 + 60444 nanosecondes), le champ d'horodatage du troisième paquet horodaté aura la valeur H2=(H0 + 2 durées paquet) = (H1 + 60444 nanosecondes), et ainsi de suite.

Dans le contexte d'un réseau SFN d'architecture DVB-T2, tous les « remultiplexeurs DVB-T2 déterministes » reçoivent le même flux principal et peuvent donc horodater les paquets de la même manière.

### 6.3 Exemple de structure simplifiée d'un dispositif d'horodatage selon un mode de réalisation de l'invention

La figure 5 présente la structure simplifiée d'un dispositif d'horodatage, encore appelé « remultiplexeur DVB-T2 déterministe », mettant en oeuvre le procédé d'horodatage selon l'invention (par exemple selon le mode de réalisation particulier décrit ci-dessus en relation avec la figure 2a). Ce dispositif d'horodatage comprend une mémoire RAM 50, une unité de traitement 51, équipée par exemple d'un processeur, et pilotée par un programme d'ordinateur stocké dans une mémoire ROM 52. A l'initialisation, les instructions de code du programme d'ordinateur sont par exemple chargées dans la mémoire RAM 50 avant d'être exécutées par le processeur de l'unité de traitement 51. L'unité de traitement 51 reçoit en entrée un paquet d'un flux de données. Le processeur de l'unité de traitement 51 traite le paquet et génère en sortie un paquet horodaté comprenant un champ d'horodatage, selon les instructions du programme 52.

Cette figure 5 illustre seulement une manière particulière, parmi plusieurs possibles, de réaliser les différents algorithmes détaillés ci-dessus, en relation avec les figures 2a à 4c.

Ce dispositif d'horodatage peut également comprendre des moyens d'insertion, sous la forme par exemple d'un dispositif d'insertion selon l'un quelconque des modes de réalisation décrits précédemment.

Selon un mode de réalisation, l'invention est mise en oeuvre au moyen de composants logiciels et/ou matériels. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

### 6.4 Exemples d'applications

### 6.4.1 Construction d'un flux DVB-T2 à partir d'un flux satellite DTH

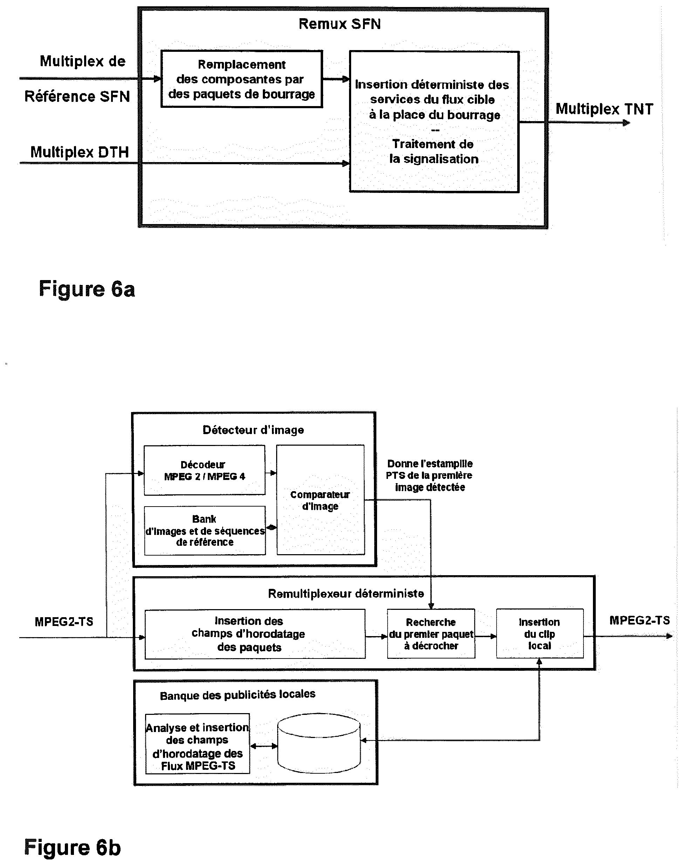

Une application de l'invention, illustrée en figure 6a, selon un mode de réalisation particulier, consiste à créer un flux DVB-T2 pour alimenter une plaque SFN à partir d'un flux satellite DTH (pour «*Direct-To-Home*» en anglais). Pour ce faire, tous les «remultiplexeurs DVB-T2 déterministes» sont installés en amont de chaque émetteur et doivent reconstruire un flux DVB-T2, de façon déterministe et synchrone, avant émission.

La bande passante de la modulation DVB-T2 utilisée ne doit pas être saturée par la somme des services du flux satellite DTH et le «remultiplexeur DVB-T2 déterministe » doit disposer d'un flux DBV-T2 de référence, dont il remplacera les paquets par des paquets de bourrage, avant de mettre en oeuvre les procédés d'horodatage et d'insertion décrits précédemment.

Ainsi, comme illustré en figure 6a, les composantes des services du flux DVB-T2 de référence sont dans un premier temps remplacées par des paquets de bourrage. Dans un deuxième temps, des champs d'horodatage sont ajoutés à ces paquets de bourrage, comme décrit précédemment.

Les paquets des composantes des services du flux satellite DTH à insérer sont également horodatés, selon un des modes de réalisation du procédé d'horodatage de l'invention décrits précédemment. Pour ce faire, un paquet de type «T2-MI DVB-T2 Timestamp» ou «MPEG-TS T2-MIP» doit être inséré dans le flux DTH.

De plus, un traitement sur la signalisation est effectuée, une partie étant conservée (NIT, TDT, T2-MIP, ...) et une autre modifiée (PAT, EIT, SDT, ...), en fonction des composantes du flux satellite insérées dans le flux DVB-T2.

Par exemple, une telle application peut servir à remplacer un service national de France 3 par un service régional. En effet, en France, les programmes régionaux de France 3 peuvent être issus d'un transport satellite.

### 6.4.2 Décrochage publicitaire d'une plaque SFN régionale

Une autre application de l'invention, illustrée en figure 6b, selon un mode de réalisation particulier, consiste à permettre un décrochage publicitaire au niveau d'une ou plusieurs plaques SFN régionales. Pour ce faire, des « remultiplexeurs DVB-T2 déterministes » sont installés en amont de chaque émetteur.

Le principe consiste à remplacer les composantes d'un service «à décrocher» par celles d'un service stocké en mémoire dans le «remultiplexeur DVB-T2 déterministe ».

Par exemple, en France, deux publicités successives sont séparées par un plan d'images fixes, plus ou moins long, ce qui permet de détecter le début d'une publicité à remplacer par une autre.

Comme illustré en figure 6b, le « remultiplexeur DVB-T2 déterministe » est associé à un détecteur d'images pour détecter les plans d'images fixes entre deux publicités et à une banque de publicités locales à insérer à la place des publicités nationales.

Le «remultiplexeur DVB-T2 déterministe» reçoit une commande de remplacement/décrochage de composantes en provenance du détecteur d'images, comprenant par exemple une estampille PTS (pour «*Présentation Time Stamp*» en anglais) correspondant à la première image à remplacer, et donc à horodater. La commande de remplacement/décrochage est transmise dans la publicité précédent celle à remplacer, de façon à ce que la première image de la publicité à remplacer soit effectivement prise en compte.

A partir de cette estampille PTS, le « remultiplexeur DVB-T2 déterministe » détecte le premier paquet à horodater (celui comprenant un PTS supérieur ou égal au PTS reçu du détecteur d'image) et met en oeuvre les procédés d'horodatage et d'insertion selon un des modes de réalisation de l'invention décrits précédemment.

Par exemple, une première étape consiste à remplacer les composantes du service à décrocher par des paquets de bourrage, de façon à libérer de la bande passante, puis à horodater ces paquets de bourrage. Les paquets de la publicité locale sont également horodatés.

Ensuite, les paquets des composantes de la publicité locale sont insérés, à la place des paquets de bourrage, en commençant par le paquet horodaté correspondant à la première image à remplacer.

Là encore, l'insertion, selon ce mode de réalisation de l'invention, permet de garantir la continuité de la signalisation, et notamment du compteur noté PCR (pour «*Program Clock Reference*» en anglais). Ainsi, l'écart entre le PCR du service national et l'horodatage des paquets est calculé en permanence, et est ensuite appliqué pour modifier les champs PCR du service local, de façon à garantir la continuité de ce champ dans le flux résultant.

Selon le même principe, un décrochage local d'un réseau de diffusion, dans un contexte «autoroutier», peut être mis en oeuvre.

Ainsi, dans un tel contexte, des émetteurs TNT, émettant sur la même fréquence (réseau SFN), sont installés le long d'un réseau autoroutier. Afin d'assurer la continuité de réception à bord des véhicules, des zones de recouvrement de diffusion sont nécessaires.

Selon l'art antérieur, lorsque l'opérateur souhaite remplacer le programme en cours par une annonce particulière par exemple, cette annonce est diffusée sur tout le réseau.

Selon ce mode de réalisation de l'invention, un « remultiplexeur déterministe » permet de « décrocher » un seul émetteur, ou deux émetteurs adjacents, c'est-à-dire de ne diffuser l'annonce particulière que sur ce seul émetteur. Dans ce cas, la commande de remplacement/décrochage peut être transportée par une commande «in-band».

### 6.4.3 Décrochage pour une insertion d'un bandeau déroulant

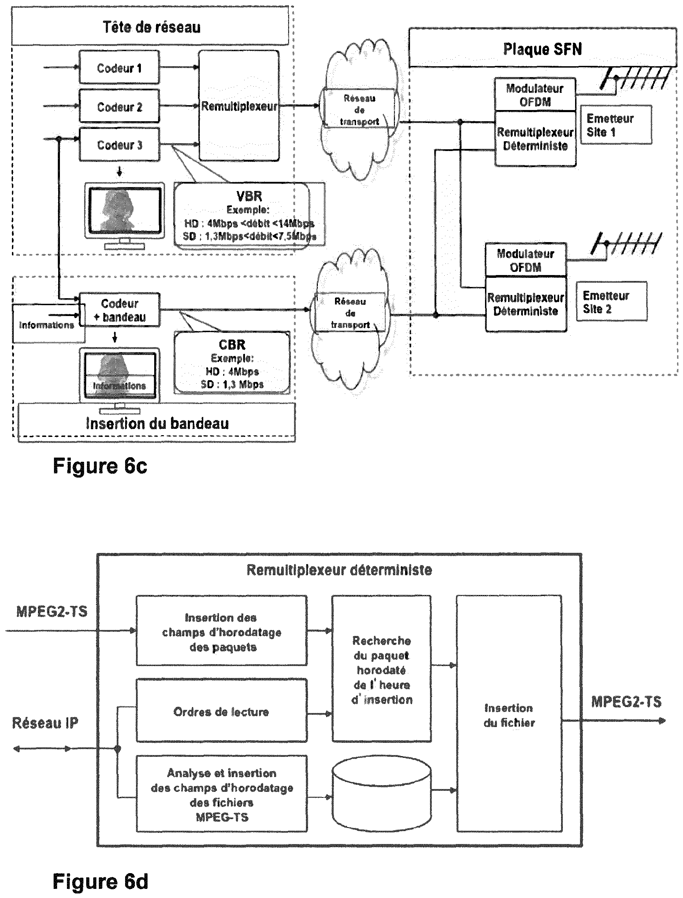

Une autre application de l'invention, illustrée en figure 6c, selon un mode de réalisation particulier, consiste à permettre un décrochage pour une insertion d'un bandeau déroulant. Pour ce faire, un « remultiplexeur DVB-T2 déterministe » remplace les composantes d'un service dans lequel une information par bandeau déroulant doit être affichée, par des composantes en provenance d'un codeur à bas débit (de type CBR, pour «*Constant BitRate*» en anglais), reprenant les mêmes programmes avec le bandeau déroulant inséré. Le débit maximum de ce codeur est fixé à la valeur minimum spécifiée en tête de réseau.

Comme le montre la figure 6c, les composantes du service avec le bandeau déroulant proviennent d'un flux « live », contrairement à l'application précédente dans laquelle la publicité locale provient d'un fichier dans la mémoire du « remultiplexeur DVB-T2 déterministe ».

### 6.4.4 Insertion de données sous forme de fichier

Une autre application de l'invention, illustrée en figure 6d, selon un mode de réalisation particulier, consiste à permettre l'insertion d'un fichier, pouvant être lu en boucle, permettant par exemple d'émettre des messages d'alerte sur une plaque SFN d'une région.

Un tel service est constitué d'objet carrousel et de signalisation propre (table AIT, ...) et peut être transmis, sous forme de fichier à télécharger, avec une commande de lecture (en boucle ou non), à tous les « remultiplexeurs DVB-T2 déterministes » de la plaque SFN régionale.

Comme décrit précédemment, les paquets du flux MPGE-TS sont horodatés, selon un mode de réalisation de l'invention, de façon à pouvoir insérer, à l'instant voulu, les paquets du fichier à insérer.

Ce fichier, comprenant des données à insérer sous forme de paquets MPGE-TS, est téléchargé dans chaque « remultiplexeur DVB-T2 déterministe » de la plaque SFN régionale, et accompagné de commandes de lecture/insertion, pouvant indiquer par l'heure de début d'insertion, le nombre de boucles consécutives à insérer, une temporisation entre chaque insertion, .... Ces commandes de lecture permettent de connaître l'instant d'insertion à comparer avec l'horodatage des paquets du flux d'origine.

Par ailleurs, le débit de ce fichier est connu, de façon à permettre au « remultiplexeur DVB-T2 déterministe » de déterminer la durée d'un paquet et donc d'horodater chaque paquet du fichier, selon un des modes de réalisation particuliers de l'in décrits précédemment. Par exemple, l'horodatage du premier paquet est 0h00, et cet horodatage est ensuite incrémenté de la durée d'un paquet pour horodater le paquet suivant. Le fichier ainsi horodaté est ensuite stocké pour l'insertion ultérieure.

Lorsque l'horodatage du paquet courant du flux d'origine correspond à un instant indiqué par la commande de lecture/insertion, le fichier horodaté est lu et son premier paquet est inséré à la place du paquet dont le champ d'horodatage correspond à l'instant d'insertion dans le flux d'origine. L'horodatage du paquet inséré doit être corrigé pour correspondre à l'horodatage du paquet remplacé.

### 6.4.5 Serveur local de diffusion pour un service régional

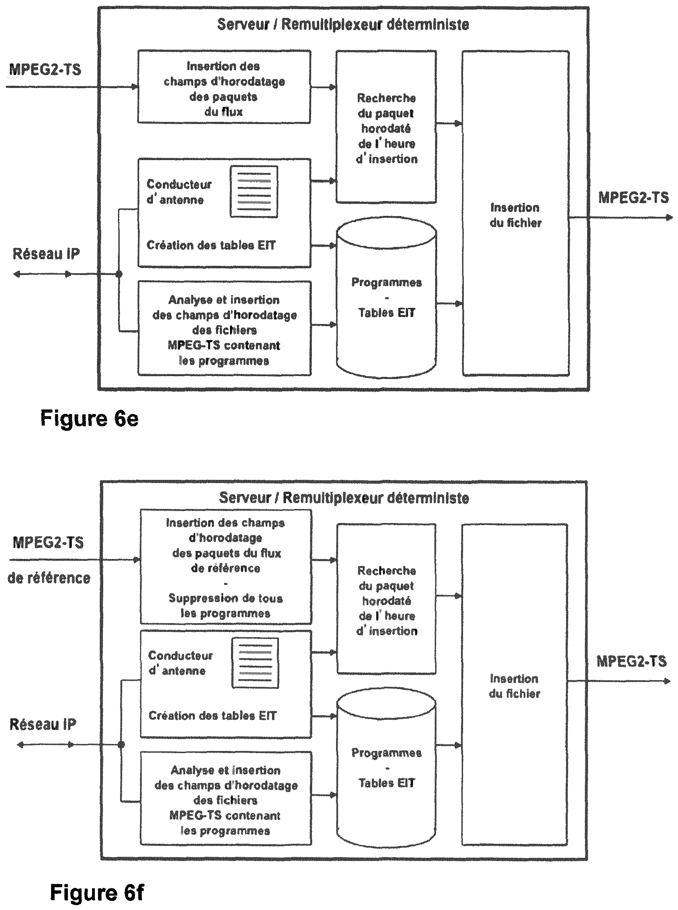

Une autre application de l'invention, illustrée en figures 6e et 6f, selon un mode de réalisation particulier, consiste à permettre par exemple à des chaines de télévision locales ou régionales de ne pas avoir de lien permanent entre le studio et les émetteurs.

Pour ce faire, les programmes locaux/régionaux sont téléchargés par les « remultiplexeurs DVB-T2 déterministes » sous forme de fichiers, accompagnés d'un « conducteur de programmes » ou « conducteur d'antenne » que prennent comme référence les «remultiplexeurs DVB-T2 déterministes» pour la diffusion des programmes. Ce conducteur d'antenne permet notamment de générer les tables EIT, et l'horodatage mis en oeuvre selon l'un des modes de réalisation particuliers de l'invention décrits précédemment est corrélé avec ce conducteur d'antenne pour assurer un synchronisme des émissions.

La figure 6e illustre une insertion d'un tel fichier dans un flux MPEG-TS existant.

La figure 6f illustre une insertion d'un tel fichier dans un flux MPEG-TS de référence, par exemple un flux TNT d'un émetteur voisin, duquel on supprime tous les services pour l'utiliser comme « support » pour insérer le fichier, conformément au conducteur d'antenne.

## Revendications

1. Procédé d'horodatage d'un flux de données organisé en paquets successifs, dans un réseau SFN d'architecture DVB-T2,
**caractérisé en ce qu'**il comprend, pour au moins un paquet dudit flux de données, une étape d'horodatage comprenant les sous-étapes suivantes et délivrant au moins un paquet horodaté :
▪ détermination d'au moins une information temporelle (201) ;
▪ ajout, dans ledit paquet, d'au moins un champ d'horodatage (202) comprenant au moins ladite information temporelle, ledit champ d'horodatage comprenant deux parties, une première partie représentant les secondes et une deuxième partie représentant les nanosecondes ;
ladite étape de détermination comprenant les sous-étapes suivantes :
- lorsque ledit paquet est un paquet de type « T2-MI DVB-T2 Timestamp » ou « MPEG-TS T2-MIP » :
o obtention d'une première information temporelle, dite information temporelle entière, à partir du champ « second_since_2000» et représentant les secondes, et d'une deuxième information temporelle, dite information temporelle décimale, à partir de la valeur du champ « subseconds » convertie en nanosecondes,
o initialisation desdites première et deuxième parties dudit champ d'horodatage respectivement avec lesdites informations temporelles entière et décimale obtenues,
- et, pour les paquets suivants le premier paquet horodaté avec ledit champ d'horodatage initialisé :
∘ détermination de la durée dudit paquet, à partir d'une taille déterminée dudit paquet et d'un débit déterminé dudit flux donné ;
∘ mise à jour desdites parties dudit champ d'horodatage en fonction de ladite durée dudit paquet déterminée et desdites informations temporelles entière et décimale préalablement obtenues lors d'une étape de détermination préalable pour un paquet distinct dudit paquet de type «T2-MI DVB-T2 Timestamp» ou «MPEG-TS T2-MIP».

2. Procédé d'horodatage selon la revendication 1, **caractérisé en ce que** lesdites informations temporelles entière et décimale sont obtenues à partir du champ «t2_timestamp_mip» si ledit paquet est un paquet de type « MPEG-TS T2-MIP».

3. Procédé d'horodatage selon la revendication 1 ou la revendication 2, **caractérisé en ce que** ladite information temporelle entière correspond au résultat d'une différence entre la valeur courante dudit champ «second_since_2000» et la valeur dudit champ «second_since_2000» à 0h00 du jour courant et **en ce que** ladite information temporelle décimale correspond à la valeur dudit champ « subseconds » converti en nanosecondes.

4. Procédé d'horodatage selon la revendication 1, **caractérisé en ce que** ladite durée dudit paquet est exprimée en nanosecondes et **en ce que** ladite étape de mise à jour dudit champ d'horodatage comprend les sous-étapes suivantes :
- initialisation d'un premier compteur et d'un deuxième compteur avec respectivement avec lesdites informations temporelles entière et décimale préalablement obtenues ;
- incrémentation dudit deuxième compteur avec ladite durée dudit paquet, délivrant une valeur incrémentée dudit deuxième compteur ;
- si ladite valeur incrémentée dudit deuxième compteur est supérieure ou égale à une valeur maximale prédéterminée :
∘ réinitialisation dudit deuxième compteur avec une nouvelle valeur courante égale à ladite valeur incrémentée moins ladite valeur maximale prédéterminée ;
∘ incrémentation d'une unité de la valeur dudit premier compteur ;
- mise à jour desdites première et deuxième parties dudit champ d'horodatage respectivement avec lesdites valeurs desdits premier et deuxième compteurs.

5. Dispositif d'horodatage d'un flux de données organisé en paquets successifs, dans un réseau SFN d'architecture DVB-T2,
**caractérisé en ce qu'**il comprend, pour au moins un paquet dudit flux de données, des moyens d'horodatage comprenant les moyens suivants et délivrant au moins un paquet horodaté :
▪ des moyens de détermination d'au moins une information temporelle ;
▪ des moyens d'ajout, dans ledit paquet, d'au moins un champ d'horodatage comprenant au moins ladite information temporelle, ledit champ d'horodatage comprenant deux parties, une première partie représentant les secondes et une deuxième partie représentant les nanosecondes ;
lesdits moyens de détermination comprenant les moyens suivants :
- lorsque ledit paquet est un paquet de type « T2-MI DVB-T2 Timestamp » ou « MPEG-TS T2-MIP » :
∘ des moyens d'obtention d'une première information temporelle, dite information temporelle entière, à partir du champ « second_since_2000» et représentant les secondes, et d'une deuxième information temporelle, dite information temporelle décimale, à partir de la valeur du champ « subseconds » convertie en nanosecondes,
∘ des moyens d'initialisation desdites première et deuxième parties dudit champ d'horodatage respectivement avec lesdites informations temporelles entière et décimale obtenues,
- et, pour les paquets suivants le premier paquet horodaté avec ledit champ d'horodatage initialisé :
∘ des moyens de détermination de la durée dudit paquet, à partir d'une taille déterminée dudit paquet et d'un débit déterminé dudit flux donné ;
∘ des moyens de mise à jour desdites parties dudit champ d'horodatage en fonction de ladite durée dudit paquet déterminée et desdites informations temporelles entière et décimale préalablement obtenues lors de la mise en oeuvre préalable des moyens de détermination pour un paquet distinct dudit paquet de type « T2-MI DVB-T2 Timestamp» ou «MPEG-TS T2-MIP».

6. Produit programme d'ordinateur comprenant des instructions de code de programme pour la mise en oeuvre du procédé d'horodatage selon au moins une des revendications 1 à 4, lorsque ledit programme est exécuté sur un ordinateur.

7. Médium de stockage lisible par ordinateur et non transitoire, stockant un programme d'ordinateur comprenant des instructions exécutables par un ordinateur ou un processeur pour mettre en oeuvre du procédé d'horodatage selon au moins une des revendications 1 à 4.

8. Procédé d'insertion d'au moins une partie d'un flux de données secondaire dans un flux de données principal, permettant d'obtenir un flux de données résultant, chaque flux étant organisé en paquets successifs, dans un réseau SFN d'architecture DVB-T2, **caractérisé en ce que** ledit procédé d'insertion comprend les étapes suivantes, pour au moins un paquet dudit flux principal, dit premier paquet, et au moins un paquet dudit flux secondaire, dit deuxième paquet :
- une étape d'horodatage (20) conforme au procédé d'horodatage selon l'une quelconque des revendications 1 à 4 ;
- une étape d'insertion (21) de ladite au moins une partie dudit flux secondaire dans ledit flux principal, en fonction desdits premier et deuxième paquets horodatés délivrés par ladite étape d'horodatage.

9. Procédé d'insertion selon la revendication 8, **caractérisé en ce qu'**il comprend, préalablement à ladite étape d'horodatage, les étapes suivantes :
- détection, dans ledit flux principal, d'au moins un paquet à remplacer ;
- détection, dans ledit flux secondaire, d'au moins un paquet à insérer, et
**en ce que** ladite étape d'horodatage est mise en oeuvre pour au moins ledit paquet à remplacer et ledit paquet à insérer, et délivre au moins un paquet à remplacer horodaté et un paquet à insérer horodaté, et
**en ce que** ladite étape d'insertion remplace ledit paquet à remplacer horodaté par ledit paquet à insérer horodaté si H1 ≤ H2 < H1 + D1,
avec H1 l'heure indiquée par le champ d'horodatage dudit paquet à remplacer horodaté, H2 l'heure indiquée par le champ d'horodatage dudit paquet à insérer horodaté, et D1 la durée dudit paquet à remplacer.

10. Procédé d'insertion selon la revendication 8, **caractérisé en ce qu'**il comprend, préalablement à ladite étape d'horodatage, une étape de remplacement dudit au moins un paquet à remplacer détecté par un paquet de bourrage et **en ce que** ladite étape d'horodatage est mise en oeuvre pour au moins ledit paquet de bourrage.

11. Procédé d'insertion selon la revendication 8, **caractérisé en ce que** ledit flux résultant est un flux devant être diffusé par au moins un émetteur dudit réseau de diffusion de type SFN, dans lequel chacun desdits émetteurs utilise une même fréquence d'émission des données dudit flux résultant.

12. Dispositif d'insertion d'au moins une partie d'un flux de données secondaire dans un flux de données principal, permettant d'obtenir un flux de données résultant, chaque flux étant organisé en paquets successifs, dans un réseau SFN d'architecture DVB-T2,
**caractérisé en ce que** ledit dispositif d'insertion comprend les moyens suivants, pour au moins un paquet dudit flux principal, dit premier paquet, et au moins un paquet dudit flux secondaire, dit deuxième paquet :
- des moyens d'horodatage comprenant un dispositif d'horodatage selon la revendication 5 ;
- des moyens d'insertion de ladite au moins une partie dudit flux secondaire dans ledit flux principal, en fonction desdits premier et deuxième paquets horodatés délivrés par lesdits moyens d'horodatage.

13. Produit programme d'ordinateur comprenant des instructions de code de programme pour la mise en oeuvre du procédé d'insertion selon au moins une des revendications 8 à 11, lorsque ledit programme est exécuté sur un ordinateur.

14. Médium de stockage lisible par ordinateur et non transitoire, stockant un programme d'ordinateur comprenant des instructions exécutables par un ordinateur ou un processeur pour mettre en oeuvre du procédé d'insertion selon au moins une des revendications 8 à 11.

## Patentansprüche

1. Verfahren zur Zeitstempelung eines Datenstroms, der in aufeinanderfolgenden Paketen organisiert ist, in einem SFN-Netz mit DVB-T2-Architektur,
**dadurch gekennzeichnet, dass** dieses, für mindestens ein Paket des Datenstroms, einen Schritt zur Zeitstempelung umfasst, der die folgenden Teilschritte umfasst und mindestens ein zeitgestempeltes Paket liefert:
• Bestimmen mindestens einer zeitlichen Information (201) ;
• Einfügen, in das Paket, mindestens eines Zeitstempelungsfelds (202), das mindestens die zeitliche Information umfasst, wobei das Zeitstempelungsfeld zwei Abschnitte umfasst, wobei ein erster Abschnitt die Sekunden darstellt und ein zweiter Abschnitt die Nanosekunden darstellt;
wobei der Schritt des Bestimmens die folgenden Teilschritte umfasst:
- wenn das Paket ein Paket vom Typ "T2-MI DVB-T2 Timestamp" oder "MPEG-TS T2-MIP" ist:
∘ Erhalten einer ersten zeitlichen Information, die als ganzzahlige zeitliche Information bezeichnet wird, aus dem Feld "second_since_2000", und die Sekunden darstellt, und einer zweiten zeitlichen Information, die als dezimale zeitliche Information bezeichnet wird, aus dem Wert des Felds "subseconds", umgewandelt in Nanosekunden,
∘ Initialisieren des ersten und zweiten Abschnitts des Zeitstempelungsfelds jeweils mit der erhaltenen ganzzahligen und dezimalen zeitlichen Information,
- und, für die Pakete, die dem ersten mit dem initialisierten Zeitstempelungsfeld zeitgestempelten Paket folgen:
∘ Bestimmen der Dauer des Pakets, aus einer bestimmten Größe des Pakets und einem bestimmten Durchsatz des Datenstroms;
∘ Aktualisieren der Abschnitte des Zeitstempelungsfelds als Funktion der bestimmten Dauer des Pakets und der ganzzahligen und dezimalen zeitlichen Information, die in einem vorherigen Schritt des Bestimmens zuvor erhalten wurden, für ein Paket, das von dem Paket vom Typ "T2-MI DVB-T2 Timestamp" oder "MPEG-TS T2-MIP" verschieden ist.

2. Verfahren zur Zeitstempelung nach Anspruch 1, **dadurch gekennzeichnet, dass** die ganzzahlige und dezimale zeitliche Information aus dem Feld "t2_timestamp_mip" erhalten werden, wenn das Paket ein Paket vom Typ "MPEG-TS T2-MIP" ist.

3. Verfahren zur Zeitstempelung nach Anspruch 1 oder Anspruch 2, **dadurch gekennzeichnet, dass** die ganzzahlige zeitliche Information dem Ergebnis einer Differenz zwischen dem aktuellen Wert des Felds "second_since_2000" und dem Wert des Felds "second_since_2000" um 0.00 Uhr des aktuellen Tags entspricht, und dadurch, dass die dezimale zeitliche Information dem Wert des Felds "subseconds", umgewandelt in Nanosekunden, entspricht.

4. Verfahren zur Zeitstempelung nach Anspruch 1, **dadurch gekennzeichnet, dass** die Dauer des Pakets in Nanosekunden ausgedrückt wird, und dadurch, dass der Schritt des Aktualisierens des Zeitstempelungsfelds die folgenden Teilschritte umfasst:
- Initialisieren eines ersten Zählers und eines zweiten Zählers jeweils mit der zuvor erhaltenen ganzzahligen und dezimalen zeitlichen Information;
- Inkrementieren des zweiten Zählers mit der Dauer des Pakets, wobei ein inkrementierter Wert des zweiten Zählers erhalten wird;
- wenn der inkrementierte Wert des zweiten Zählers größer oder gleich einem vorherbestimmten Maximalwert ist:
∘ Reinitialisieren des zweiten Zählers mit einem neuen aktuellen Wert gleich dem inkrementierten Wert minus dem vorherbestimmten Maximalwert;
∘ Inkrementieren einer Einheit des Werts des ersten Zählers;
- Aktualisieren des ersten und zweiten Abschnitts des Zeitstempelungsfelds mit den Werten des ersten und zweiten Zählers.

5. Vorrichtung zur Zeitstempelung eines Datenstroms, der in aufeinanderfolgenden Paketen organisiert ist, in einem SFN-Netz mit DVB-T2-Architektur,
**dadurch gekennzeichnet, dass** diese, für mindestens ein Paket des Datenstroms, Mittel zur Zeitstempelung umfasst, welche die folgenden Mittel umfassen und mindestens ein zeitgestempeltes Paket liefern:
• Mittel zum Bestimmen mindestens einer zeitlichen Information;
• Mittel zum Einfügen, in das Paket, mindestens eines Zeitstempelungsfelds, das mindestens die zeitliche Information umfasst, wobei das Zeitstempelungsfeld zwei Abschnitte umfasst, wobei ein erster Abschnitt die Sekunden darstellt und ein zweiter Abschnitt die Nanosekunden darstellt;
wobei die Mittel zum Bestimmen die folgenden Mittel umfassen:
- wenn das Paket ein Paket vom Typ "T2-MI DVB-T2 Timestamp" oder "MPEG-TS T2-MIP" ist:
∘ Mittel zum Erhalten einer ersten zeitlichen Information, die als ganzzahlige zeitliche Information bezeichnet wird, aus dem Feld "second_since_2000", und die Sekunden darstellt, und einer zweiten zeitlichen Information, die als dezimale zeitliche Information bezeichnet wird, aus dem Wert des Felds "subseconds", umgewandelt in Nanosekunden,
∘ Mittel zum Initialisieren des ersten und zweiten Abschnitts des Zeitstempelungsfelds jeweils mit der erhaltenen ganzzahligen und dezimalen zeitlichen Information,
- und, für die Pakete, die dem ersten mit dem initialisierten Zeitstempelungsfeld zeitgestempelten Paket folgen,:
∘ Mittel zum Bestimmen der Dauer des Pakets, aus einer bestimmten Größe des Pakets und einem bestimmten Durchsatz des Datenstroms;
∘ Mittel zum Aktualisieren der Abschnitte des Zeitstempelungsfelds als Funktion der bestimmten Dauer des Pakets und der ganzzahligen und dezimalen zeitlichen Information, die bei der vorherigen Verwendung der Mittel zum Bestimmen zuvor erhalten wurden, für ein Paket, das von dem Paket vom Typ "T2-MI DVB-T2 Timestamp" oder "MPEG-TS T2-MIP" verschieden ist.

6. Computerprogrammprodukt, umfassend Programmcodeinstruktionen zur Durchführung des Verfahrens zur Zeitstempelung nach mindestens einem der Ansprüche 1 bis 4, wenn das Programm auf einem Computer ausgeführt wird.

7. Computerlesbares und nicht-transitorisches Speichermedium, welches ein Computerprogramm speichert, das Instruktionen umfasst, die von einem Computer oder einem Prozessor ausgeführt werden können, um das Verfahren zur Zeitstempelung nach mindestens einem der Ansprüche 1 bis 4 durchzuführen.

8. Verfahren zum Einfügen mindestens eines Abschnitts eines sekundären Datenstroms in einen Hauptdatenstrom, welches es ermöglicht, einen resultierenden Datenstrom zu erhalten, wobei jeder Strom in aufeinanderfolgenden Paketen organisiert ist, in einem SFN-Netz mit DVB-T2-Architektur,
**dadurch gekennzeichnet, dass** das Verfahren zum Einfügen die folgenden Schritte, für mindestens ein Paket des Hauptstroms, das als erstes Paket bezeichnet wird, und mindestens ein Paket des sekundären Stroms, das als zweites Paket bezeichnet wird, umfasst:
- einen Schritt zur Zeitstempelung (20) gemäß dem Verfahren zur Zeitstempelung nach einem der Ansprüche 1 bis 4;
- einen Schritt des Einfügens (21) des mindestens einen Abschnitts des sekundären Stroms in den Hauptstrom, als Funktion des ersten und zweiten zeitgestempelten Pakets, die vom Schritt zur Zeitstempelung geliefert werden.

9. Verfahren zum Einfügen nach Anspruch 8, **dadurch gekennzeichnet, dass** dieses, vor dem Schritt zur Zeitstempelung, die folgen Schritte umfasst:
- Detektieren, im Hauptstrom, mindestens eines zu ersetzenden Pakets;
- Detektieren, im sekundären Strom, mindestens eines einzufügenden Pakets; und
dadurch, dass der Schritt zur Zeitstempelung für mindestens das zu ersetzende Paket und das einzufügende Paket durchgeführt wird und mindestens ein zeitgestempeltes zu ersetzendes Paket und ein zeitgestempeltes einzufügendes Paket liefert; und dadurch, dass der Schritt des Einfügens das zeitgestempelte zu ersetzende Paket durch das zeitgestempelte einzufügende Paket ersetzt, wenn H1 ≤ H2 < H1 + D1,
wobei H1 die Stunde ist, die vom Zeitstempelungsf eld des zeitgestempelten zu ersetzenden Pakets angezeigt wird, H2 die Stunde ist, die vom Zeitstempelungsfeld des zeitgestempelten einzufügenden Pakets angezeigt wird, und D1 die Dauer des zu ersetzenden Pakets ist.

10. Verfahren zum Einfügen nach Anspruch 8, **dadurch gekennzeichnet, dass** dieses, vor dem Schritt zur Zeitstempelung, einen Schritt des Ersetzens des mindestens einen zu ersetzenden Pakets, das von einem Füllpaket detektiert wird, umfasst, und dadurch, dass der Schritt zur Zeitstempelung für mindestens das Füllpaket durchgeführt wird.

11. Verfahren zum Einfügen nach Anspruch 8, **dadurch gekennzeichnet, dass** der resultierende Strom ein Strom ist, der von mindestens einem Sender des Diffusionsnetzes vom Typ SFN verteilt werden muss, wobei jeder der Sender die gleiche Sendefrequenz der Daten des resultierenden Stroms verwendet.

12. Vorrichtung zum Einfügen mindestens eines Abschnitts eines sekundären Datenstroms in einen Hauptdatenstrom, welche es ermöglicht, einen resultierenden Datenstrom zu erhalten, wobei jeder Strom in aufeinanderfolgenden Paketen organisiert ist, in einem SFN-Netz mit DVB-T2-Architektur,
**dadurch gekennzeichnet, dass** die Vorrichtung zum Einfügen die folgenden Mittel, für mindestens ein Paket des Hauptstroms, das als erstes Paket bezeichnet wird, und mindestens ein Paket des sekundären Stroms, das als zweites Paket bezeichnet wird, umfasst:
- Mittel zur Zeitstempelung, die eine Vorrichtung zur Zeitstempelung nach Anspruch 5 umfassen;
- Mittel zum Einfügen des mindestens einen Abschnitts des sekundären Stroms in den Hauptstrom, als Funktion des ersten und zweiten zeitgestempelten Pakets, die von den Mitteln zur Zeitstempelung geliefert werden.

13. Computerprogrammprodukt, umfassend Programmcodeinstruktionen zur Durchführung des Verfahrens zum Einfügen nach mindestens einem der Ansprüche 8 bis 11, wenn das Programm auf einem Computer ausgeführt wird.

14. Computerlesbares und nicht-transitorisches Speichermedium, welches ein Computerprogramm speichert, das Instruktionen umfasst, die von einem Computer oder einem Prozessor ausgeführt werden können, um das Verfahren zum Einfügen nach mindestens einem der Ansprüche 8 bis 11 durchzuführen.

## Claims

1. Method for time-stamping a data stream organised in successive packets, in an SFN network with DVB-T2 architecture,
**characterised in that** it comprises, for at least one packet of said data stream, a time-stamping step comprising the following sub-steps and delivering at least one time-stamped packet:
▪ determination of at least one piece of time information (201);
▪ addition, to said packet, of at least one time-stamp field (202) comprising at least said time information, said time-stamp field comprising two parts, a first part representing seconds and a second part representing nanoseconds;
said determination step comprising the following sub-steps:
- when said packet is a packet of the type "T2-MI DVB-T2 Timestamp" or "MPEG-TS T2-MIP":
∘ obtaining a first piece of time information, called integer time information, from the "second_since_2000" field and representing seconds, and a second piece of time information, called decimal time information, from the value of the "subseconds" field converted into nanoseconds,
∘ initialisation of said first and second parts of said time-stamp field respectively with said integer and decimal information obtained,
- and, for the packets following the first time-stamped packet with said initialised time-stamp field:
∘ determination of the duration of said packet, from a determined size of said packet and from a determined rate of said given stream;
∘ updating of said parts of said time-stamp field as a function of said determined duration of said packet and of said integer and decimal time information previously obtained at a prior determination stage for a packet distinct from said packet of the type "T2-MI DVB-T2 Timestamp" or "MPEG-TS T2-MIP".

2. Time-stamping method according to Claim 1, **characterised in that** said pieces of integer and decimal time information are obtained from the field "t2_timestamp_mip" if said packet is a packet of the type "MPEG-TS T2-MIP".

3. Time-stamping method according to Claim 1 or 2, **characterised in that** said integer time information corresponds to the result of a difference between the current value of said "second_since_2000" field and the value of said "second_since_2000" field at 0h00 of the current day and **in that** said decimal time information corresponds to the value of said "subseconds" field converted to nanoseconds.

4. Time-stamping method according to Claim 1, **characterised in that** said duration of said packet is expressed in nanoseconds and **in that** said step of updating said time-stamp field comprises the following sub-steps:
- initialisation of a first counter and a second counter respectively with said integer and decimal time information previously obtained;
- incrementation of said second counter with said duration of said packet, delivering an incremented value of said second counter;
- if said incremented value of said second counter is greater than or equal to a predetermined maximum value:
∘ reinitialisation of said second counter with a new current value equal to said incremented value less said predetermined maximum value;
∘ incrementation of a unit of the value of said first counter;
- updating of said first and second parts of said time-stamp field respectively with said values of said first and second counters.

5. Device for time-stamping a data stream organised in successive packets, in an SFN network with DVB-T2 architecture,
**characterised in that** it comprises, for at least one packet of said data stream, time-stamping means comprising the following means and delivering at least one time-stamped packet:
▪ means for determining at least one piece of time information;
▪ means for adding, to said packet, at least one time-stamp field comprising at least said time information, said time-stamp field including two parts, a first part representing seconds and a second part representing nanoseconds;
said determination means comprising the following means:
- when said packet is a packet of the type "T2-MI DVB-T2 Timestamp" or "MPEG-TS T2-MIP":
∘ means for obtaining a first piece of time information, called integer time information, from the "second_since_2000" field and representing seconds, and a second piece of time information, called decimal time information, from the value of the "subseconds" field converted into nanoseconds,
∘ means for initialising said first and second parts of said time-stamp field respectively with said integer and decimal information obtained,
- and, for the packets following the first time-stamped packet with said initialised time-stamp field:
∘ means for determining the duration of said packet, from a determined size of said packet and from a determined rate of said given stream;
∘ means for updating said parts of said time-stamp field as a function of said determined duration of said packet and of said integer and decimal time information previously obtained during the prior implementation of the determination means for a packet distinct from said packet of the type "T2-MI DVB-T2 Timestamp" or "MPEG-TS T2-MIP".

6. Computer program product comprising program code instructions for implementing the time-stamping method according to at least one of Claims 1 to 4, when said program is executed on a computer.

7. Machine-readable and non-transient storage medium, storing a computer program comprising instructions executable by a computer or a processor for implementing the time-stamping method according to at least one of Claims 1 to 4.

8. Method for inserting at least one part of a secondary data stream into a main data stream, thereby obtaining a resultant data stream, each stream being organised in successive packets, in an SFN network with DVB-T2 architecture, **characterised in that** said insertion method comprises the following steps, for at least one packet of said main stream, called first packet, and at least one packet of said secondary stream, called second packet:
- a time-stamping step (20) in accordance with the time-stamping method according to any one of Claims 1 to 4;
- a step of inserting (21) said at least one part of said secondary stream into said main stream, as a function of said first and second time-stamped packets delivered by said time-stamping step.

9. Insertion method according to Claim 8, **characterised in that** it comprises, prior to said time-stamping step, the following steps:
- detection, in said main stream, of at least one packet to be replaced;
- detection, in said secondary stream, of at least one packet to be inserted, and
**in that** said time-stamping step is implemented for at least said packet to be replaced and said packet to be inserted, and delivers at least one time-stamped packet to be replaced and one time-stamped packet to be inserted, and
**in that** said insertion step replaces said time-stamped packet to be replaced by said time-stamped packet to be inserted if H1 ≤ H2 < H1 + D1,
where H1 is the time indicated by the time-stamp field of said time-stamped packet to be replaced, H2 is the time indicated by the time-stamp field of said time-stamped packet to be inserted, and D1 is the duration of said packet to be replaced.

10. Insertion method according to Claim 8, **characterised in that** it comprises, prior to said time-stamping step, a step of replacing said at least one detected packet to be replaced by a dummy packet and **in that** said time-stamping step is implemented for at least said dummy packet.

11. Insertion method according to Claim 8, **characterised in that** said resultant stream is a stream to be broadcast by at least one transmitter of said SFN distribution network, in which each of said transmitters uses a same frequency for transmitting the data of said resultant stream.

12. Device for inserting at least one part of a secondary data stream into a main data stream, thereby obtaining a resultant data stream, each stream being organised in successive packets, in an SFN network with DVB-T2 architecture,
**characterised in that** said insertion device comprises the following means, for at least one packet of said main stream, called first packet, and at least one packet of said secondary stream, called second packet:
- time-stamping means comprising a time-stamping device according to Claim 5;
- means for inserting said at least one part of said secondary stream into said main stream, as a function of said first and second time-stamped packets delivered by said time-stamping means.

13. Computer program product comprising program code instructions for implementing the insertion method according to at least one of Claims 8 to 11, when said program is executed on a computer.

14. Machine-readable and non-transient storage medium, storing a computer program comprising instructions executable by a computer or a processor for implementing the insertion method according to at least one of Claims 8 to 11.
